# EUROPÄISCHE PATENTSCHRIFT

(11) **EP 1 636 406 B1**
(45) Veröffentlichungstag und Bekanntmachung des Hinweises auf die Patenterteilung: **14.02.2007**
(21) Anmeldenummer: 03740351.6
(22) Anmeldetag: 26.06.2003
(51) Int. Cl.: D02G 3/44, D02G 3/38

(54) **ANGELSCHNUR**
FISHING LINE
LIGNE DE PECHE

(43) Veröffentlichungstag der Anmeldung: 22.03.2006
(73) Patentinhaber: Bloch, Klaus, D-53757 Sankt Augustin (DE)
(72) Erfinder: Bloch, Klaus, D-53757 Sankt Augustin (DE)
(74) Vertreter: Wagner, Matthias
(86) Internationale Anmeldenummer: PCT/EP2003/006743
(87) Internationale Veröffentlichungsnummer: WO 2005/001177

(56) Entgegenhaltungen:
- GB-A- 1 232 450
- US-A- 3 024 589
- US-A- 5 881 492
- US-A1- 2002 127 398

## Beschreibung

Die Erfindung bezieht sich auf eine Angelschnur.

Es sind Angelschnüre hoher Reißfestigkeit bekannt, die entweder als Monofilamente ausgebildet sind oder andererseits aus geflochtenen Schnüren einer Vielzahl von Filamenten bestehen, wobei hierfür synthetische Fasern hoher Festigkeit eingesetzt werden, wozu beispielhaft auf die DE 44 02 630 C1 verwiesen wird. Zum Schutz gegen Beschädigungen werden solche Fäden und Schnüre mit einem Mantel beispielsweise durch Beschichtung oder Extrusion versehen, wozu beispielhaft auf die WO 9203922 A1 verwiesen wird. Nachteilig bei den bekannten hybriden Angelschnüren ist der Einsatz von Adhäsivmaterialien, wie Schmelzklebern zur Verbesserung der Haftfestigkeit zwischen dem Mantel und/oder den Filamenten. Solche Adhäsionsschichten/Kleberschichten wirken sich nachteilig auf die Festigkeitseigenschaften und Biegewechselfestigkeit der Angelschnur aus und unterliegen im Laufe der Zeit auch Versprödungen, Zersetzungserscheinungen und Auflösungserscheinungen.

Geflochtene oder gezwirnte Angelschnüre haben darüber hinaus den Nachteil, daß durch die Zwirnung die Reißdehnung nicht unwesentlich erhöht wird. Andererseits ist es auch möglich, daß bei Einsatz der Angelschnüre im Meerwasser beim Wiedereinholen der Angelschnur Wassertröpfchen sich in der Angelschnur festsetzen zwischen den einzelnen Filamenten und nach dem Trocknen der Angelschnur Salzkristalle hinterlassen, die beim Wiederabspulen der Angelschnur zur Zerstörung durch Reibung führen.

Der Erfindung liegt die Aufgabe zugrunde eine Angelschnur zu schaffen, die den hohen Anforderungen auch beim Gebrauch im Meerwasser und für große Fische genügt. Zu den Anforderungen an Angelschnüre gehört eine hohe Tragkraft beim geringem Verschleiß, Bißfestigkeit, hohe Reißfestigkeit, sehr geringe Reißdehnung, glatte Oberfläche für gute Gleiteigenschaften, wasserabweisende und schmutzabweisende Oberfläche, Einfärbbarkeit, gute Knotenfestigkeit, hohe Biegewechselfestigkeit, Flexibilität, UV-Beständigkeit, Witterungsbeständigkeit, möglichst gute Querfestigkeit, hohe Abriebfestigkeit.

Diese Aufgabe wird durch eine Angelschnur gemäß Patentanspruch 1 gelöst, welche zudem universell einsetzbar und leicht handhabbar ist.

Die Angelschnur gemäß der Erfindung zeichnet sich dadurch aus, daß sie einen Kern aus mindestens einem Multifilamentgarn auf Basis synthetischer organischer Faserstoffe und einen aus Folienbändchen aus Polytetrafluorethylen (PTFE), welche in S-Richtung und Z-Richtung oder umgekehrt fest auf den Kern gewickelt sind, gebildeten Mantel umfaßt. Das Umwickeln erfolgt bevorzugt abwechselnd. Bei dickeren Kernen, Angelschnüren können auch zwei oder mehr Folienbändchen erst in S-Richtung oder Z-Richtung oder umgekehrt und danach mindestens ein Folienbändchen in der anderen Richtung um die Seele gewickelt werden.

Die erfindungsgemäß ausgebildete Angelschnur erfüllt alle an sie gestellten Anforderungen in Bezug auf hohe Festigkeit, Reißfestigkeit und Querfestigkeit bei sehr geringer Reißdehnung und aufgrund des aus Folienbändchen aus PTFE gebildeten Mantels weist sie nicht nur sehr gute Gleiteigenschaften auf, sondern sie ist UV-beständig, wasserabweisend, schmutzabweisend, besitzt eine hohe Abriebfestigkeit und kann auch in der Optik durch Einfärben verändert werden.

Vorteilhafte Weiterbildungen der erfindungsgemäßen Angelschnur sind den kennzeichnenden Merkmalen der Unteransprüche entnehmbar.

Insbesondere ist es möglich, die Folienbändchen aus PTFE so um den Kern aus Multifilamenten zu wickeln, daß eine geschlossene Umhüllung - Mantel - gebildet wird.

Erfindungsgemäß verleiht der Kern aus synthetischen organisch endlosen Filamenten, die einzeln oder gebündelt ausgebildet sein können, die aus Multifilamentgarnen bestehen können oder aus gesponnenen Garnen dem Faden die erforderliche Reißfestigkeit bei geringer Reißdehnung und hohe Tragkraft, während die Folienbändchen aus PTFE als Umhüllung die erforderlichen Außeneigenschaften vermitteln, wie Gleiteigenschaft, Biegewechselfestigkeit, Abriebfestigkeit, UV-Beständigkeit, Witterungsbeständigkeit, Wasserabweisung, chemische Beständigkeit, Einfärbbarkeit. Mittels der Folienbändchen gelingt es, eine Umhüllung zu schaffen, die wie ein Mantel geschlossen ist, wobei durch das Umwinden des Kerns mit einem Folienbändchen aus PTFE, also einer flächigen Struktur im Gegensatz zu Filamenten, welche eine Linienstruktur aufweisen, die Querfestigkeit des Kerns zusätzlich erhöht wird, da durch diese Umwindung auch die Reißfestigkeit der Folienbändchen aus PTFE als Umhüllung zur Erhöhung der Querreißfestigkeit der Filamente des Kerns beitragen. Durch die Umwindung des Kerns mit den Folienbändchen ist auch ein runder Querschnitt der Angelschnur erzielbar. In einer besonders bevorzugten Ausführung der Erfindung ist die Angelschnur nur von zwei Folienbändchen aus PTFE umwunden, welche den Mantel bilden, von denen das eine Folienbändchen in S-Richtung und das andere Folienbändchen in Z-Richtung um den Kern gewunden ist, wobei die Folienbändchen mit einer Seite vollflächig an dem Kern bzw. aufeinander zur Anlage gebracht sind. Durch entsprechende feste Umwindung des Kerns mit den Folienbändchen entsteht ein fester Zusammenschluß von Kern und Mantel.

Der Aufbau der Angelschnur aus den nur zwei Komponenten ohne Haftvermittler, nämlich dem thermoplastischen Material des Kerns und des Mantels ergibt eine hohe Geschmeidigkeit und hohe Biegewechselbeanspruchbarkeit.

Die Folienbändchen aus PTFE sind bevorzugt mit 200 - 400 Touren/m um den Kern gewunden. Die für die Herstellung der Angelschnur eingesetzten Folienbändchen weisen bevorzugt eine Breite von 1 - 2 mm, insbesondere 1 - 1,5 mm für die Umhüllung auf. Insbesondere werden Folienbändchen aus PTFE von 220 - 880 dtex verwendet. Ein Vorzugsbereich ist hierbei 350 - 450 dtex.

Derartige Folienbändchen aus PTFE werden aus sehr dünnen PTFE-Folien durch Aufschneiden derselben gefertigt. Die Folienbändchen sind bevorzugt aus 100% reinem PTFE gefertigt. PTFE ist bis zu 260°C dauerbelastbar und verträgt kurzfristige Temperaturspitzen - Gebrauchstemperatur - bis 300°C. PTFE ist nicht brennbar, da der Limiting-Oxygen-Index (LOI) bei 95% O₂ liegt. Die Feinreißfestigkeit von Folienbändchen aus PTFE liegt im Bereich von 2,7 - 3,0 cN/dtex bei einer Reißdehnung von bis zu höchstens 6%.

Durch den aus den Folienbändchen aus PTFE gebildeten Mantel wird auch die Knotenfestigkeit der erfindungsgemäßen Angelschnur verbessert im Vergleich zu beispielsweise aufextrudierten Umhüllungen aus thermoplastischen Kunststoffen, da durch die feste Umwindung des Kerns mittels der Folienbändchen die Querreißfestigkeit des Kerns ebenfalls erhöht wird.

Erfindungsgemäß werden für den Kern der Angelschnur bevorzugt hochfeste Filamente aus organischen Synthesefasern, insbesondere Multifilamentgarne einer Reißdehnung kleiner 8%, vorzugsweise kleiner 6% und bevorzugt kleiner 4% eingesetzt. Die Feinheitsreißfestigkeit der für den Kern eingesetzten Multifilamente sollte mindestens 20 cN/dtex betragen.

Um eine maximale Festigkeit bei geringstmöglicher Reißdehnung der erfindungsgemäßen Angelschnur zu erhalten, sind die den Kern bildenden hochfesten Filamente und Multifilamentgarne im wesentlichen gerade und parallel zueinander verlaufend ausgerichtet, d.h. sie sind weder untereinander noch miteinander verzwirnt. Auf diese Weise wird erreicht, daß auch die Angelschnur sich nicht kringelt. Bei einem Kern, dessen Filamente bzw. Multifilamentgarne nicht verzwirnt sind, bleibt die ursprüngliche Reißdehnung erhalten, d.h. sie wird nicht vergrößert, da keine Konstruktionsdehnung hinzukommt, wie sie beispielsweise durch Verzwirnen oder Verflechten von Filamenten entsteht. Auch bei eingesetzten Multifilamentgarnen für den Kern sind die Filamente bevorzugt nicht verzwirnt.

Andererseits ist es auch möglich, bei der erfindungsgemäßen Angelschnur die den Kern bildenden Filamente/Multifilamentgarne geringfügig mit 1 - 30 Touren/m miteinander zu verzwirnen, wobei auch unverzwirnte Multifilamentgarne eingesetzt werden können. Auch hierbei bleibt im wesentlichen die niedrige Reißdehnung erhalten. Es ist aber auch möglich, bei Angelschnüren mit hoher Reißfestigkeit und sehr geringer Reißdehnung die den Kern bildenden Filamente/Multifilamentgarne untereinander auch mit mehr als 30 Touren/m vorzugsweise jedoch nicht mit mehr als 200 Touren/m zu verzwirnen.

Wesentlich für die Ausbildung der erfindungsgemäßen Angelschnur ist, daß der Kern und der von den Folienbändchen aus PTFE gebildete Mantel ohne jegliche Adhäsionsschicht, wie Klebeschicht, Schmelzkleber oder sonstige Bindemittel zu einer Einheit mechanisch zusammengefügt sind durch das feste Umwinden des Kerns mittels der Folienbändchen aus PTFE. Hieraus resultiert eine hohe Geschmeidigkeit und Biegewechselbeanspruchbarkeit.

Für den Kern werden bevorzugt Filamente in Form von Multifilamentgarnen eingesetzt. Multifilamentgarne sind aus einzelnen Filamenten mit einer Feinheit kleiner 10 µm zusammengesetzt, wobei beispielsweise ein Multifilamentgarn von 550 dtex etwa 85 - 90 Filamente einer Feinheit von 6 µm umfaßt, die Filamente können aber auch sehr viel feiner sein bis zu einem Durchmesser von 2 µm. Für den Kern werden bevorzugt Multifilamentgarne in unterschiedlichen Größen je nach Anwendungszweck eingesetzt, beispielsweise 220 dtex, 440 dtex, 1.200 dtex, vorzugsweise im Bereich von 110 - 1.800 dtex. Üblicherweise werden Multifilamentgarne eingesetzt, deren Filamente nicht miteinander verzwirnt sind.

Gemäß einer bevorzugten Ausführung der erfindungsgemäßen Angelschnur sind für den Kern hochfeste Filamente/Multifilamentgarne aus Polyethylen mit einem ultrahohen Molekulargewicht (UHMW-PE) von 110 - 1.760 dtex und einer Feinheitsreißfestigkeit von mindestens 20 cN/dtex, insbesondere mindestens 25 cN/dtex und einer Reißdehnung kleiner 8%, insbesondere kleiner 6% eingesetzt. Hierbei handelt es sich um einen Kern, der der Angelschnur eine sehr hohe Tragkraft bei sehr geringer Reißdehnung verleiht. Üblicherweise werden für den Kern der Angelschnur untereinander gleiche Filamente/Filamentgarne eingesetzt. Es ist aber auch möglich, bei der Anforderung zusätzlicher Eigenschaften den Kern aus Filamenten/Filamentgarnen unterschiedlichen Aufbaus in Bezug auf das Material und/oder Gestalt auszubilden. Gemäß einer bevorzugten Weiterbildung der erfindungsgemäßen Angelschnur ist vorgesehen, zusätzlich zu den Filamenten/Multifilamentgarnen aus synthetischen organischen Faserstoffen des Kerns mindestens ein leitfähiges Filament oder Filamentgarn auf Basis eines thermoplastischen Kunststoffes vorzusehen. Als leitfähige Filamente/Filamentgarne werden solche mit einem elektrischen Widerstand von 10⁰ - 10¹⁰ Ohm/cm eingesetzt. Die leitfähigen Filamentgarne enthalten als thermoplastischen Kunststoff bevorzugt Nylon oder Polyester. Die Leitfähigkeit wird durch Zusatz von Carbon erreicht, wobei dieses in dem Filament enthalten sein kann und/oder aufgedampft ist. Ein Gehalt von 5 Gew.-% Carbon bezogen auf das Filament ist ausreichend. Die leitfähigen Filamente/Filamentgarne werden bevorzugt in feiner Ausführung eingesetzt, bevorzugt im Bereich von 18 - 40 dtex. Ein leitfähiges Filamentgarn kann hierbei bevorzugt zwischen 1-10 Filamente aufweisen. Bevorzugt wird ein Nylon mit einem Schmelzpunkt im Bereich von etwa 215°C bzw. Polyester mit einem Schmelzpunkt im Bereich von etwa 255°C für die leitfähigen Filamentgarne eingesetzt. Das leitfähige Filament/Filamentgarn trägt auch zur Verbesserung der Haftung der Filamente bei. Wesentlich ist jedoch, daß der Kern der Angelschnur überwiegend aus Multifilamentgarn mit hoher Reißfestigkeit und geringer Reißdehnung besteht und nur zu einem geringen Anteil vorzugsweise im Bereich von 3 - 12 Gew.-% bezogen auf den Kern leitfähiges Filamentgarn enthält. Es ist auch möglich, daß die Multifilamentgarne hoher Reißfestigkeit und geringer Dehnung des Kerns mit den leitfähigen Filamentgarnen verzwirnt sind, wobei die Verzwirnung als S- und/oder Z-Drehung vorgenommen werden kann, wobei maximal bis zu 30 Zwirndrehungen/m vorgesehen sind. Durch die Verzwirnung der leitfähigen Filamente/Filamentgarne mit den übrigen Multifilamentgarnen des Kerns wird ein Verfestigungseffekt dergestalt erreicht, daß die Querfestigkeit der Multifilamentgarne erhöht wird und dadurch die Knotenfestigkeit der Angelschnur verbessert wird. Durch die Verzwirnung, wobei sich das feine leitfähige Filamentgarn in die Oberfläche der übrigen Multifilamentgarne des Kerns einlagert, wird auch die gewünschte runde Form des Querschnittes des Kerns und damit der Angelschnur besser erreicht. Die erforderliche Glätte, Geschmeidigkeit, Abriebfestigkeit, Wasserfestigkeit und Seewasserfestigkeit sowie UV-Beständigkeit erhält der Kern durch die Umhüllung aus den Folienbändchen aus PTFE.

Eine bevorzugte Ausbildung der erfindungsgemäßen Angelschnur umfaßt einen Kern aus hochfesten Filamenten aus Polyethylen mit einem ultrahohen Molekulargewicht (UHMW-PE) von 330 - 450 dtex und einer Feinheitsreißfestigkeit von mindestens 28 cN/dtex und einer Reißdehnung kleiner 4%, sowie 3-8 Gew.-% bezogen auf das Gesamtgewicht des Kerns leitfähiges Filamentgarn auf Basis von Nylon oder Polyester, wobei der Mantel von zwei Folienbändchen aus PTFE gebildet ist, von denen eines in S-Richtung und das andere in Z-Richtung oder umgekehrt mit 200 - 400 Touren/m um den Kern gewickelt ist, wobei die Folienbändchen aus PTFE eine Breite von 1 - 1,5 mm aufweisen und die Filamente/Filamentgarne und leitfähigen Filamente des Kerns unverzwirnt sind und durch die Umwindung mit den Folienbändchen aus PTFE ein geschlossener Mantel gebildet wird. Die wasserabweisende Ausbildung der Umhüllung aus PTFE und die Geschlossenheit derselben verhindert das Eindringen von Wasser/Salzwasser in die Angelschnur, so daß auch nach dem Trocknen keine Salzkristalle hinterlassen werden können, und die Angelschnur ihre Gleitfähigkeit und Funktionsfähigkeit auf lange Zeit zum Auf- und Abspulen behält.

Erfindungsgemäße Angelschnüre weisen eine hohe lineare Tragkraft auf, welche bei Einsatz von Multifilamenten aus UHMW-PE für den Kern mindestens 35 g/den (31,5 g/dtex) beträgt.

Bei Einsatz von Multifilamentgarnen aus UHMW-PE von 220 dtex (200 denier) für den Kern mit einer Reißfestigkeit von 31 cN/dtex bzw. 35 g/den weist eine erfindungsgemäße Angelschnur mit einem Durchmesser von 0,19 mm eine Tragkraft von etwa 8,1 kg auf, welche sich aus 5,2 kg Anteil des Kerns und 2,9 kg aus dem Mantel gebildet von den Folienbändchen aus PTFE zusammensetzt.

Bei einer erfindungsgemäßen Angelschnur mit einem Durchmesser von 0,35 mm mit Multifilamenten aus UHMW-PE des Kerns von 880 dtex (800 denier) ergibt sich eine Tragkraft von ca. 30 kg, welche sich aus 28 kg basierend auf dem Kern und weiteren 2,5 - 3 kg aus der Umhüllung des Kerns mit den Folienbändchen aus PTFE ergibt.

Da das spezifische Gewicht der Folienbändchen aus PTFE höher ist als das von Wasser, dasjenige der Multifilamente des Kerns aus beispielsweise UHMW-PE etwas geringer als das von Wasser, kann durch den Anteil und das Verhältnis des Gewichts des Kerns zum Gewicht des Mantels das Gewicht der Angelschnur bestimmt werden, so daß sie etwas schwerer als Wasser ausgebildet wird und damit nicht auf dem Wasser schwimmt, sondern sinkt. Bevorzugt ist das spezifische Gewicht der Angelschnur im Bereich von etwa 1,5 - 1,8 g/cm³. Eine schwerere Angelschnur hat auch den Vorteil, daß sie sich besser werfen läßt, da sie eine höhere kinetische Energie entfaltet. Hierbei ist auch die Ausbildung des unverzwirnten Kerns aus Filamenten/Multifilamentgarnen von Vorteil, da die Angelschnur nicht zum Kringeln neigt.

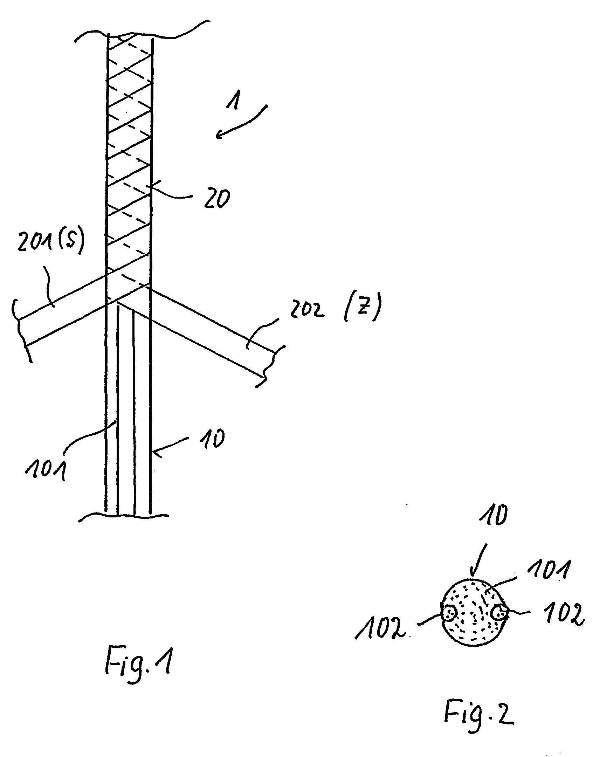

In der Zeichnung Figur 1 ist die erfindungsgemäße Angelschnur schematisch mit den Einzelkomponenten im Herstellungsverfahren dargestellt. Die Angelschnur 1 umfaßt den Kern 10, der sich aus den Filamentgarnen 101 zusammensetzt, welche ohne Verzwirnung aus parallel zueinander verlaufenden Filamenten bestehen und wobei auch die Filamentgarne 101 ohne Verzwirnung parallel nebeneinander verlaufend angeordnet sind. Der Kern wird von zwei Folienbändchen aus PTFE 201, 202 umwunden, wobei das Folienbändchen 202 in Z-Richtung und das Folienbändchen 201 in S-Richtung um den Kern 10 gewunden werden - oder auch umgekehrt -, wobei die beiden Folienbändchen einen geschlossenen Mantel 20 aus PTFE bilden. Die Folienbändchen 201 und 202 werden mit beispielsweise 200 - 400 Touren/m fest um den Kern 10 gewickelt, wobei sie mit einer Seite vollflächig um den Kern bzw. das bereits dort aufliegende erste Folienbändchen aufliegend gewickelt werden. Durch diese Umwicklung des Kerns 10 mit den Folienbändchen 201, 202 wird die Querreißfestigkeit des Kerns und damit seine Knotenfestigkeit zusätzlich verbessert. Kern 10 und Umhüllung 20 bilden einen festen Zusammenschluß ohne Einsatz jeglicher Klebemittel oder dergleichen.

In Weiterbildung der Erfindung ist es auch möglich, siehe Figur 2, den Kern 10 der Angelschnur aus unterschiedlichen Filamenten/Filamentgarnen 101 aufzubauen, wobei zusätzlich zu Filamentgarnen 101 aus einer hochfesten Synthesefaser wie beispielsweise bevorzugt UHMW-PE noch ein oder zwei leitfähige Filamente oder Filamentgarne 102 hinzukommen, die entweder unverzwirnt mit den übrigen Multifilamentgarnen 101 den Kern bilden oder aber mit diesem verzwirnt sind. Das oder die leitfähigen Filamente 102 bestehen beispielsweise aus einem thermoplastischen Polyester oder Nylon und sind leitfähig gemacht durch Aufdampfen einer geringen Menge von Carbon, beispielsweise 5 Gew.-% bezogen auf das Filament. Das leitfähige Filamentgarn kann aus wenigen Einzelfilamenten zusammengesetzt sein und es weist bevorzugt eine geringe Stärke von beispielsweise 30 dtex auf. Der Kern 10 gemäß Figur 2 wird dann anschließend, wie in der Figur 1 dargestellt, mit zwei Folienbändchen aus PTFE umwickelt, welche eine durchgehende Umhüllung bilden, die auch schmutzabweisend ist.

### Ausführungsbeispiel 1:

Aus einem Multifilamentgarn aus Synthesefasern aus Polyethylen mit einem ultrahohen Molekulargewicht UHMW-PE einer Dichte von 0,97 g/cm³, einer Reißfestigkeit von 3,1 N/tex bzw. 35 g/den einem Elastizitätsmodul von 97 N/tex und einer Reißdehnung von 3,6%, beispielsweise einer Dyneema^{(R)}-Faser von 220 dtex wird mit einem leitfähigen Filamentgarn von 22 dtex, das drei Filamente enthält, auf Basis von Nylon 6 sowie 5 Gew.-% Carbon auf der Oberfläche aufgedampft, das einen elektrischen Widerstand von 10⁶ - 10⁸ Ohm/cm aufweist, eine Reißdehnung von 53% und Reißfestigkeit von 2,9 cN/dtex aufweist zu einem Kern beispielsweise in S-Drehung mit 20 Touren/m verzwirnt. Der Kern wird anschließend mit zwei Folienbändchen aus PTFE von 420 dtex mit einer Breite von etwa 1,5 mm mit 300 Touren/m umwunden. Die erhaltene Angelschnur weist einen Durchmesser von 0,19 mm auf, sie weist eine Reißdehnung von 4% auf und hat eine lineare Tragkraft von 8,1 kg, welche sich aus 5,2 kg Anteil des Kerns und 2,9 kg aus der Umhüllung der Folienbändchen aus PTFE zusammensetzt. Die Angelschnur ist seewasserfest, abriebfest, hat eine glatte Oberfläche, ist geschmeidig, hat eine sehr gute Knotenfestigkeit und Biegewechselfestigkeit, sie ist UV-beständig, schmutzabweisend und erfüllt alle Anforderungen.

### Ausführungsbeispiel 2:

Aus zwei Multifilamentgarnen von 220 dtex und einem Multifilamentgarn von 440 dtex aus dem gleichen Material wie bei Ausführungsbeispiel 1 beschrieben, wird ein nicht gezwirnter Kern hergestellt, der anschließend wie in der Figur 1 dargestellt mit zwei Folienbändchen auf PTFE von 420 dtex und einer Breite von etwa 1,5 mm fest umwunden wird, wobei ein Bändchen in S-Richtung und ein Bändchen in Z-Richtung um den Kern gewickelt wird. Die Umwicklung erfolgt mit 300 Touren/m. Man erhält eine Angelschnur mit einem runden Querschnitt mit einem Durchmesser von 0,35 mm, welches eine Reißdehnung von 3,6% und eine lineare Tragkraft von 31 kg aufweist.

### Ausführungsbeispiel 3:

Aus einem Multifilamentgarn von 440 dtex aus dem gleichen Material wie bei Ausführungsbeispiel 1 beschrieben, wird ein Kern hergestellt, bei dem die Multifilamentgarne parallel zueinander verlaufen einschließlich ihrer Filamente. Der Kern wird dann wie in der Figur 1 ersichtlich mit zwei Folienbändchen aus PTFE wie bei Ausführungsbeispiel 2 beschrieben ummantelt, wobei eine geschlossene Umhüllung erhalten wird. Die erhaltene Angelschnur weist einen runden Querschnitt auf mit einem Durchmesser von 0,28 mm, sie hat eine Reißdehnung von 3,6% und weist eine lineare Tragkraft von 15,5 kg auf.

## Patentansprüche

1. Angelschnur umfassend einen Kern aus mindestens einem Multifilamentgarn auf Basis synthetischer organischer Faserstoffe und einem Mantel **dadurch genkennzeichnet, daß** der Mantel aus Folienbändchen aus Polytetrafluorethylen (PTFE), welche in S-Richtung und Z-Richtung oder umgekehrt fest auf den Kern gewickelt sind, gebildet ist.

2. Angelschnur nach Anspruch 1, **dadurch gekennzeichnet, daß** der Mantel von zwei Folienbändchen aus PTFE gebildet ist, von denen eines in S-Richtung und eines in Z-Richtung um den Kern gewunden ist, wobei die Folienbändchen mit einer Seite vollflächig an dem Kern bzw. aufeinander zur Anlage gebracht sind.

3. Angelschnur nach Anspruch 1 oder 2, **dadurch gekennzeichnet, daß** die Folienbändchen mit 200-400 Touren/m um den Kern gewunden sind.

4. Angelschnur nach einem der Ansprüche 1 bis 3, **dadurch gekennzeichnet, daß** Folienbändchen aus PTFE einer Breite von 1-2 mm für den Mantel verwendet sind.

5. Angelschnur nach einem der Ansprüche 1 bis 4, **dadurch gekennzeichnet, daß** Folienbändchen aus PTFE von 220 - 880 dtex verwendet sind.

6. Angelschnur nach Anspruch 5, **dadurch gekennzeichnet, daß** Folienbändchen aus PTFE von 330 - 450 dtex verwendet sind.

7. Angelschnur nach einem der Ansprüche 1 bis 6, **dadurch gekennzeichnet, daß** für den Kern hochfeste Mulitfilamentgarne einer Feinheitsreißfetigkeit von mindestens 20 cN/dtex eingesetzt sind.

8. Angelschnur nach einem der Ansprüche 1 bis 7, **dadurch gekennzeichnet, daß** für den Kern hochfeste Multifilamentgarne einer Reißdehnung kleiner 8% eingesetzt sind.

9. Angelschnur nach einem der Ansprüche 1 bis 8, **dadurch gekennzeichnet, daß** die den Kern bildenden hochfesten Filamente und Multifilamentgarne im wesentlichen gerade und parallel zueinander verlaufend ausgerichtet sind.

10. Angelschnur nach einem der Ansprüche 1 bis 8, **dadurch gekennzeichnet, daß** die den Kern bildenden hochfesten Filamente und Multifilamentgarne geringfügig mit 1 - 30 Touren/m miteinander verzwirnt sind.

11. Angelschnur nach einem der Ansprüche 1 bis 8, **dadurch gekennzeichnet, daß** die den Kern bildenden hochfesten Filamente und Multifilamentgarne mit mehr als 30 Touren/m und höchstens bis zu 200 Touren/m miteinander verzwirnt sind.

12. Angelschnur nach einem der Ansprüche 1 bis 11, **dadurch gekennzeichnet, daß** der Kern von Filamenten unterschiedlichen Aufbaus in Bezug auf das Material und/oder Gestalt gebildet ist.

13. Angelschnur nach einem der Ansprüche 1 bis 12, **dadurch gekennzeichnet, daß** für den Kern hochfeste Filamente/Multifilamentgarne aus Polyethylen mit einem ultrahohen Molekulargewicht (UHMW-PE) von 110 - 1760 dtex und einer Feinheitsreißfestigkeit von mindestens 20 cN/dtex insbesondere mindestens 25 cN/dtex und einer Reißdehnung kleiner 8% insbesondere kleiner 6% verwendet sind.

14. Angelschnur nach einem der Ansprüche 1 - 13, **dadurch gekennzeichnet, daß** der Kern zusätzlich zu den Filamenten/Filamentgarnen aus synthetischen organischen Faserstoffen mindestens ein leitfähiges Filament oder Filamentgarn auf Basis eines thermoplastischen Kunststoffes enthält.

15. Angelschnur nach Anspruch 14, **dadurch gekennzeichnet, daß** das leitfähige Filament/Filamentgarn einen elektrischen Widerstand von 10° bis 10¹⁰ Ohm/cm aufweist.

16. Angelschnur nach einem der Ansprüche 14 oder 15, **dadurch gekennzeichnet, daß** das leitfähige Filament/Filamentgarn mit Carbon bedampft ist oder Carbon enthält.

17. Angelschnur nach einem der Ansprüche 14 bis 16, **dadurch gekennzeichnet, daß** der Kern 3 - 12 Gew.-% leitfähiges Filament/Filamentgarn enthält.

18. Angelschnur nach einem der Ansprüche 14 bis 17, **dadurch gekennzeichnet, daß** das leitfähige Filament/Filamentgarn als thermoplastischen Kunststoff Nylon oder Polyester enthält.

19. Angelschnur nach einem der Ansprüche 14 bis 18, **dadurch gekennzeichnet, daß** ein leitfähiges Filamentgarn von 18 bis 40 dtex verwendet wird.

20. Angelschnur nach einem der Ansprüche 1 bis 2, **dadurch gekennzeichnet, daß** der Kern eine lineare Tragkraft von mindestens 35g/den (31,5 g/dtex) aufweist.

## Claims

1. A fishing line, comprising a core made of at least one multifilament yarn on the basis of synthetic organic fiber materials, and a casing, **characterized in that** the casing is made of small film strips made of polytetrafluoroethylene (PTFE), which have been firmly wound on the core in the S-direction and the Z-direction, or vice versa.

2. The fishing line in accordance with claim 1, **characterized in that** the casing is formed of two small film strips made of PTFE, one of which is wound on the core in the S-direction and one in the Z-direction, and one side of the small film strips is brought in its entirety into contact with the core, or on top of the other one.

3. The fishing line in accordance with claim 1 or 2, **characterized in that** the small film strips are wound on the core with 200 to 400 turns/m.

4. The fishing line in accordance with one of claims 1 to 3, **characterized in that** small film strips made of PTFE of a width of 1 to 2 mm are used for the casing.

5. The fishing line in accordance with one of claims 1 to 4, **characterized in that** small film strips made of PTFE of 220 to 880 dtex are used.

6. The fishing line in accordance with claim 5, **characterized in that** small film strips made of PTFE of 330 to 450 dtex are used.

7. The fishing line in accordance with one of claims 1 to 6, **characterized in that** high-strength multifilament yarns with a linear density breaking resistance of at least 20 cN/dtex are used for the core.

8. The fishing line in accordance with one of claims 1 to 7, **characterized in that** high-strength multifilament yarns with an elongation at break of less than 8 % are used for the core.

9. The fishing line in accordance with one of claims 1 to 8, **characterized in that** the high-strength filaments and filament yarns constituting the core are substantially aligned to extend straight and parallel with each other.

10. The fishing line in accordance with one of claims 1 to 8, **characterized in that** the high-strength filaments and multifilament yarns constituting the core are slightly twisted together at 1 to 30 turns/m.

11. The fishing line in accordance with one of claims 1 to 8, **characterized in that** the high-strength filaments and multifilament yarns constituting the core are twisted together at more than 30 turns/m, but at most up to 200 turns/m.

12. The fishing line in accordance with one of claims 1 to 11, **characterized in that** the core is formed from filaments of a different structure in regard to the material and/or shape.

13. The fishing line in accordance with one of claims 1 to 12, **characterized in that** high-strength filaments/multifilament yarns made of polyethylene of an ultra-high molecular weight (UHMW-PE) of 110 to 1760 dtex and a linear density breaking resistance of at least 20 cN/dtex, in particular at least 25 cN/dtex, and an elongation at break of less than 8 %, in particular less than 6 %, are used for the core.

14. The fishing line in accordance with one of claims 1 to 13, **characterized in that** in addition to the filaments/filament yarns made of synthetic organic fiber materials, the core contains at least one conductive filament or filament yarn on the basis of a thermoplastic material.

15. The fishing line in accordance with claim 14, **characterized in that** the conductive filament/filament yarn has an electrical resistance of 10° to 10¹⁰ Ohm/cm.

16. The fishing line in accordance with one of claims 14 or 15, **characterized in that** carbon is applied to the conductive filament/filament by vacuum deposition, or it contains carbon.

17. The fishing line in accordance with one of claims 14 to 16, **characterized in that** the core contains 3 to 12 weight-% of conductive filament/filament yarn.

18. The fishing line in accordance with one of claims 14 to 17, **characterized in that** the conductive filament/filament yarn contains nylon or polyester as the thermoplastic material.

19. The fishing line in accordance with one of claims 14 to 18, **characterized in that** a conductive filament yarn of 18 to 40 dtex is used.

20. The fishing line in accordance with one of claims 1 to 2, **characterized in that** the core has a linear support capacity of at least 35 g/den (31.5 g/dtex).

## Revendications

1. Fil de pêche comprenant un noyau d'au moins un fil multifilament à base de matières fibreuses organiques synthétiques et une gaine, **caractérisé en ce que** la gaine est constituée de rubans de polytétrafluoroéthylène (PTFE), lesquels sont solidement enroulés en S et en Z ou inversement sur le noyau.

2. Fil de pêche selon la revendication 1, **caractérisé en ce que** la gaine est constituée de deux rubans en PTFE, dont l'un est enroulé en spirale en S et l'autre l'est en Z, les rubans prenant appui avec un côté de toute la surface sur le noyau ou, selon le cas, l'un sur l'autre.

3. Fil de pêche selon la revendication 1 ou 2, **caractérisé en ce que** les rubans s'enroulent autour du noyau en 200-400 tours/mètre.

4. Fil de pêche selon l'une des revendications 1 à 3, **caractérisé en ce qu'**on utilise pour la gaine des rubans en PTFE d'une largeur de 1-2 millimètres.

5. Fil de pêche selon l'une des revendications 1 à 4, **caractérisé en ce qu'**on utilise des rubans en PTFE de 220 à 880 dtex.

6. Fil de pêche selon la revendication 5, **caractérisé en ce qu'**on utilise des rubans en PTFE de 330 à 450 dtex.

7. Fil de pêche selon l'une des revendications 1 à 6, **caractérisé en ce qu'**on utilise pour le noyau des fils multifilaments très solides d'une résistance à la rupture du fil d'au moins 20 cN/dtex.

8. Fil de pêche selon l'une des revendications 1 à 7, **caractérisé en ce qu'**on utilise pour le noyau des fils multifilaments très solides d'une élongation à la rupture qui est inférieure à 8%.

9. Fil de pêche selon l'une des revendications 1 à 8, **caractérisé en ce que** les filaments très solides ainsi que les fils multifilaments, formant le noyau, ont une orientation qui les guide essentiellement en ligne droite et en parallèle l'un à l'autre.

10. Fil de pêche selon l'une des revendications 1 à 8, **caractérisé en ce que** les filaments très solides ainsi que les fils multifilaments, formant le noyau, sont légèrement tordus l'un avec l'autre par 1 à 30 tours/mètre.

11. Fil de pêche selon l'une des revendications 1 à 8, **caractérisé en ce que** les filaments très solides ainsi que les fils multifilaments, formant le noyau, sont tordus l'un avec l'autre par plus de 30 tours/mètre et tout au plus 200 tours/mètre.

12. Fil de pêche selon l'une des revendications 1 à 11, **caractérisé en ce que** le noyau est formé de filaments de différents constitutions sur le plan du matériau et/ou de la structure.

13. Fil de pêche selon l'une des revendications 1 à 12, **caractérisé en ce qu'**on utilise pour le noyau des filaments très solides/fils multifilaments en polyéthylène d'un poids moléculaire ultra-élevé (UHMW-PE) de 110 à 1760 dtex et d'une résistance à la rupture du fil d'au moins 20 cN/dtex, en particulier d'au moins 25 cN/dtex et d'une élongation à la rupture qui est inférieure à 8%, en particulier inférieure à 6%.

14. Fil de pêche selon l'une des revendications 1 à 13, **caractérisé en ce que** le noyau contient, en plus des filaments/fils en filaments de matières fibreuses organiques synthétiques au moins un filament conducteur ou fil en filaments à base d'une matière synthétique thermoplastique.

15. Fil de pêche selon la revendication 14, **caractérisé en ce que** le filament/fil en filaments conducteur présente une résistance électrique de 10 à 10¹⁰ ohms/cm.

16. Fil de pêche selon l'une des revendications 14 ou 15, **caractérisé en ce que** le filament/fil en filaments conducteur est métallisé au carbone ou contient du carbone.

17. Fil de pêche selon l'une des revendications 14 à 16, **caractérisé en ce que** le noyau contient de 3 à 12% en poids de filament/fil en filaments conducteur.

18. Fil de pêche selon l'une des revendications 14 à 17, **caractérisé en ce que** le filament/fil en filaments conducteur contient comme matière synthétique thermoplastique du Nylon ou du polyester.

19. Fil de pêche selon l'une des revendications 14 à 18, **caractérisé en ce qu'**on utilise un fil en filaments conducteur de 18 à 40 dtex.

20. Fil de pêche selon l'une des revendications 1 à 2, **caractérisé en ce que** le noyau présente une masse portante linéique d'au moins 35 g/den (31,5 g/dtex).
